# EUROPEAN PATENT APPLICATION

(11) **EP 2 392 730 A1**
(43) Date of publication of application: **07.12.2011**
(21) Application number: 11167766.2
(22) Date of filing: 31.07.2007
(51) Int. Cl.: D21J 3/00, D21J 5/00, D21J 7/00, D21C 9/00

(54) **Paper pulp composition and article formed therefrom**

(30) Priority: 31.07.2006 GB 0615072
(62) Divisional of application: 07766473.8
(71) Applicant: Vernacare Limited, Bolton Lancashire, BL1 2TX (GB)
(72) Inventor: Webster, Lesley, Newton Kyme, Yorkshire LS24 9LS (GB)
(74) Representative: Gregory, Robert John H.

(57) **Abstract**

A mouldable paper pulp composition comprising an aqueous suspension of a base material comprising paper particles and a detergent resistant binding agent for the paper particles, in an intimate and substantially homogenous mix. Also provided are articles moulded from the composition.

## Description

The present invention relates to paper pulp compositions and articles moulded therefrom.

It is known to form disposable urine bottles, bed pans and the like from paper pulp which, after use, can be placed in a macerator to reduce the particles to a size where they can be discharged into the normal sewer system. It would also be desirable to form other articles, notably wash basins, from paper pulp so that they too are disposable. However, whilst the moulding of wash bowls and the like presents few technical problems, it has been found that the presence of soap or detergent in the water carried by the wash bowl renders the moulded paper pulp article very absorbent, with the consequence that the article disintegrates very quickly, thereby rendering it unusable.

Therefore, for receptacles which are likely to come into contact with soap or detergent, it is not possible to form them from disposable paper pulp and instead reusable receptacles, usually formed from plastics, are used. These require thorough cleansing after each use, but even with very thorough cleaning, the risk of cross-contamination and cross-infection between patients remains.

It is an object of the present invention to provide a paper pulp formulation which can be made into moulded paper pulp articles which will allow the article to retain its shape and rigidity.

In accordance with a first aspect of the invention, there is provided a mouldable paper pulp composition comprising an aqueous suspension of:
(a) a base material comprising paper particles; and
(b) a detergent resistant binding agent for the paper particles,

in an intimate and substantially homogenous mix.

By including a detergent resistant binding agent in the formulation, it has been found that articles formed from the formulation do not disintegrate when they come into contact with soap solution or detergent solution. This makes the formulation particularly suitable for forming disposable wash bowls, which are likely to come into contact with soap solution or detergent solution in use. In addition, the composition provides the means for a cost effective process for the manufacture of articles capable of retaining their shape and rigidity since it is not necessary to adapt conventional moulding techniques or machinery to provide an article with the means to maintain its shape and rigidity.

The paper particles comprise a number of interwoven cellulose fibres. The detergent resistant binding agent is capable of binding the fibres of the paper particles together. The base material may further comprise an additional binder to improve the binding of paper fibres together. The binder may comprise a soluble wax. The soluble wax may be a natural (such as bee's wax) or synthetic (such as Alkyl Ketene Dimer (AKD) wax) wax. Preferably, the binder comprises a natural wax.

The composition may comprise 0 - 20% of binder by dry weight per Kg of dry base material, more preferably, 7 - 9 %.

In one embodiment, the composition further comprises a sizing agent. The sizing agent acts to improve the binding action of the binder and paper fibres and to lower the pH, improving the binding properties of the detergent resistant binding agent and/or binder so as to enable the moulded, finished article to better retain its shape. The sizing agent may be any suitable material capable of improving the binding of the detergent resistant binding agent and/or binder and paper fibres together. Preferably, the sizing agent comprises an aluminium salt. More preferably, the sizing agent comprises aluminium sulphate.

The composition may comprise an additional 0 - 300 g of sizing agent by dry weight per Kg of dry base material, more preferably, 200 - 230 g.

The paper particles may be derived from any suitable material, for example, in one embodiment the paper particles are derived from recycled newspaper. The paper particles are advantageously derived from any recyclable source so as to minimise the environmental impact of the manufacturing process. The base material may comprise 65 - 100 % by dry weight of paper particles, more preferably, 80 - 95 %.

It has been found that by the addition of a detergent resistant binding agent, the finished article is resistant to the effects of soap and detergent solutions, with the effect that the finished article can withstand such solutions while remaining intact.

It has been found that an amount from 10ml to 200ml of the detergent resistant binding agent per Kg of dry base material is effective to provide the desired properties of resistance to soap and detergent. An amount of 10 to 100ml of detergent resistant binding agent per Kg of dry base material is preferred, more preferably, 30 - 40 ml.

Preferably the amount of detergent resistant binding agent in terms of solids content is 1 - 100 g per Kg of dry base material, more preferably 3 - 60 g, more preferably 3 - 30 g, more preferably 9 - 12 g.

The detergent resistant binding agent may comprise any material capable of providing sufficient detergent resistance to an article made from the composition so that the article can maintain its shape and rigidity even when in contact with soap and detergent solutions. Preferably, the detergent resistant binding agent comprises a fluorocarbon, more preferably, a fluorocarbon resin emulsion, such as Mystolene D2404.

In one embodiment, the detergent resistant binding agent is Mystolene D2404 (available from Catomance technologies Limited, 4 Caxton Place, Stevenage, SG1 2UF, UK).

When formulating the composition, the detergent resistant binding agent may advantageously be in the form of a resin, emulsion and/or resin emulsion. The detergent resistant binding agent acts to prevent the moulded article from disintegrating when in contact with soap and detergent solutions.

The composition may additionally comprise at least one biocide to prevent the growth of micro-organisms prior to, during and after the manufacture of an article. The biocide may comprise any one or more of the following group, which comprises biozynol and bactolyse (available from EKA Chemicals AB, Whiteberg Industrial Estate, Blackburn, Lancashire and Nalco Company, 1601 W. Diehl Road, Naperville, IL, 60563-1198 U.S.A). In a preferred embodiment, the composition comprises at least two different biocides.

The biocide is preferably present in an amount sufficient to arrest the growth of micro-organisms in the composition. More preferably, the composition comprises an additional 0 - 5 g of biocide per Kg of dry base material, even more preferably, 0.1 - 0.5 g.

In accordance with a second aspect of the present invention, there is provided an article manufactured from a composition as described hereinabove.

The articles manufactured using the composition of the present invention are, in addition to being resistant to soap and detergent solutions, capable of maintaining their shape and rigidity when contacted with engine oil, cooking oil, emulsion paint and/or wall paper paste.

By way of example only, a specific embodiment of the present invention will now be described.

A receptacle in the form of an open-topped wash bowl comprises a generally planar base and an upstanding peripheral enclosing wall, defining a containing volume. The wash bowl is formed from moulded paper pulp material in a known manner.

The relative proportions of the constituents of the paper pulp from which the wash bowl is formed are as follows (the amounts given are for the formation of 1 kg of dried paper pulp material):
915g of particulate waste paper (e.g. old newspaper).
85g of binder (e.g. wax, such as bees wax).
218g of a sizing agent (such as aluminium sulphate).
35 ml of a detergent resistant binding agent (e.g. a fluorocarbon resin emulsion such as Mystolene).

Optionally, the mixture may also contain one or more biocide materials.

The above components of the composition are suspended in water such that the solid particles form from 0.8% to 1.5% of the aqueous suspension. The pulp material is then formed into wash bowls on conventional paper pulp moulding machines and the formed articles are then dried in an oven to form the finished article.

In alternative embodiments, the pulp material is formed into other vessels for containing or receiving engine oil, cooking oil, emulsion paint and wall paper paste.

### THE FOLLOWING STATEMENTS DESCRIBE SOME PREFERRED

### EMBODIMENTS OF THE PRESENT INVENTION

1. A mouldable paper pulp composition comprising an aqueous suspension of:
(a) a base material comprising paper particles; and
(b) a detergent resistant binding agent for the paper particles,
   in an intimate and substantially homogenous mix.

2. A composition as defined in statement 1, wherein the base material comprises a binder for binding the paper particles.

3. A composition as defined in statement 2, wherein the binder comprises a natural or synthetic wax.

4. A composition as defined in statement 3, wherein the binder comprises a natural wax.

5. A composition as defined in any one of statements 2 to 4, wherein the base material comprises 0 - 20% of binder by dry weight per Kg of dry base material.

6. A composition as defined in statement 5, wherein the base material comprises 7 - 9% of binder by dry weight per Kg of dry base material.

7. A composition as defined in any one of the preceding statements wherein the base material comprises 80 - 100 % by dry weight of paper particles.

8. A composition as defined in any one of the preceding statements wherein the detergent resistant binding agent comprises any material capable of providing sufficient water proofing and detergent resistance to an article made from the composition so that the article can maintain its shape and rigidity even when in contact with soap and detergent solutions.

9. A composition as defined in statement 8 wherein the detergent resistant binding agent comprises a fluorocarbon

10. A composition as defined in statement 9 wherein the fluorocarbon is a fluorocarbon resin emulsion.

11. A composition as defined in any one of the preceding statements wherein the detergent resistant binding agent is present in an amount from 10ml to 200ml per Kg dry weight of base material.

12. A composition as defined in statement 11 1 wherein the detergent resistant binding agent is present in an amount from 10ml to 100ml per Kg dry weight of base material.

13. A composition as defined in statement 12 wherein the detergent resistant binding agent is present in an amount from 30ml to 40ml per Kg dry weight of base material.

14. A composition as defined in any one of the preceding statements further comprising a sizing agent.

15. A composition as defined in statement 14 wherein the sizing agent comprises an aluminium salt.

16. A composition as defined in statement 15 wherein the sizing agent comprises aluminium sulphate.

17. A composition as defined in any one of statements 14 to 16 wherein the composition comprises an additional 0 - 300 g of sizing agent by dry weight per Kg of dry base material.

18. A composition as defined in any one of statements 14 to 16 wherein the composition comprises an additional 200 - 230 g of sizing agent by dry weight per Kg of dry base material.

19. A composition as defined in any one of the preceding statements further comprising at least one biocide.

20. A composition as defined in statement 19 wherein the biocide comprises any one or more of the following group comprising biozynol and bactolyse.

21. A composition as defined in statement 19 or 20 wherein the composition comprises an additional 0 - 5 g of biocide per Kg of dry base material

22. A composition as defined in statement 21 wherein the composition comprises an additional 0.1 - 0.5 g of biocide per Kg of dry base material.

23. An article manufactured from a composition as defined in any one of statements 1 to 22.

24. An article as defined in statement 23, wherein the article is a receptacle.

25. An article as defined in statement 24, wherein the receptacle is an open-topped wash bowl.

## Claims

1. A mouldable paper pulp composition comprising an aqueous suspension of:
(a) a base material comprising paper particles; and
(b) a detergent resistant binding agent for the paper particles,
in an intimate and substantially homogenous mix.

2. A composition as claimed in claim1, wherein the base material comprises a binder for binding the paper particles.

3. A composition as claimed in claim 2, wherein the binder comprises a natural or synthetic wax, for example a natural wax.

4. A composition as claimed in claim 2 or claim 3, wherein
the base material comprises 0 - 20% of binder by dry weight per Kg of dry base material, for example 7 - 9% of binder by dry weight per Kg of dry base material.

5. A composition as claimed in any one of the preceding claims wherein the base material comprises 80 - 100 % by dry weight of paper particles.

6. A composition as claimed in any one of the preceding claims
wherein the detergent resistant binding agent comprises any material capable of providing sufficient water proofing and detergent resistance to an article made from the composition so that the article can maintain its shape and rigidity even when in contact with soap and detergent solutions.

7. A composition as claimed in claim 6 wherein the detergent resistant binding agent comprises a fluorocarbon, for example a fluorocarbon resin emulsion.

8. A composition as claimed in any one of the preceding claims wherein the detergent resistant binding agent is present in an amount from 10ml to 200ml per Kg dry weight of base material, for example from 10ml to 100ml per Kg dry weight of base material, or from 30ml to 40ml per Kg dry weight of base material.

9. A composition as claimed in any one of the preceding claims further comprising a sizing agent, for example an aluminium salt, e.g. aluminium sulphate.

10. A composition as claimed in claim 9 wherein the composition comprises an additional 0 - 300 g of sizing agent by dry weight per Kg of dry base material, for example an additional 200 - 230 g of sizing agent by dry weight per Kg of dry base material.

11. A composition as claimed in any one of the preceding claims further comprising at least one biocide, for example a biocide selected from the group comprising biozynol and bactolyse.

12. A composition as claimed in claim 11 wherein the composition comprises an additional 0 - 5 g of biocide per Kg of dry base material, for example an additional 0.1 - 0.5 g of biocide per Kg of dry base material.

13. An article manufactured from a composition as claimed in any one of claims 1 to 12.

14. An article as claimed in claim 13, wherein the article is a receptacle.

15. An article as claimed in claim 14, wherein the receptacle is an open-topped wash bowl.
